Europäisches Patentamt

European Patent Office

Office européen des brevets

(19)

(11) Veröffentlichungsnummer: **0 178 005**
**B1**

(12) **EUROPÄISCHE PATENTSCHRIFT**

(45) Veröffentlichungstag der Patentschrift:
**11.05.88**

(51) Int. Cl.⁴: **B 65 G 65/48**

(21) Anmeldenummer: **85201518.9**

(22) Anmeldetag: **21.09.85**

(54) Vorrichtung zum dosierten Zuführen von Schüttgut zu Verbraucherstellen.

(30) Priorität: **09.10.84 DE 3436972**

(43) Veröffentlichungstag der Anmeldung:
**16.04.86 Patentblatt 86/16**

(45) Bekanntmachung des Hinweises auf die Patenterteilung:
**11.05.88 Patentblatt 88/19**

(84) Benannte Vertragsstaaten:
**BE DE FR GB NL SE**

(56) Entgegenhaltungen:
**FR - A - 2 296 994**
**FR - A - 2 426 000**
**FR - A - 2 441 998**
**GB - A - 323 670**

(73) Patentinhaber: **METALLGESELLSCHAFT AG,
Reuterweg 14 Postfach 3724, D-6000 Frankfurt/M.1 (DE)**

(72) Erfinder: **Schuster, Gert, Am Mühlgraben 8, D-6392 Neu Anspach 4 (DE)**

(74) Vertreter: **Rieger, Harald, Dr., Reuterweg 14, D-6000 Frankfurt am Main (DE)**

**Beschreibung**

Die Erfindung betrifft eine Vorrichtung zum dosierten Zuführen von Schüttgut zu Verbraucherstellen mittels einer rotierenden Walze, die unter einem Vorratsbehälter angeordnet ist gemäss Oberbegriff des Anspruchs 1.

In manchen Fällen muss Schüttgut aus einem Vorratsbehälter einer oder mehreren Verbraucherstellen in genau dosierten Mengen zugeteilt werden, wobei die Menge variabel und bei mehreren Verbraucherstellen unterschiedlich sein kann.

Aus der DE-PS 2 821 632 ist eine Vorrichtung entsprechend dem Oberbegriff des Anspruchs 1 zum Zuführen von Kohlegranulat zu Brennern mittels Luftförderung bekannt, bei der unter einem Vorratsbehälter eine rotierbare Walze angeordnet ist. Der Vorratsbehälter ist mit einer Mehrzahl von Auslassöffnungen ausgestattet, aus denen sich das Material in einzelnen Materialströmen auf der Walze abböscht. Durch die Drehung der Walze werden die einzelnen Materialströme in einzelne Einlauföffnungen von Zuführungsrohren zu den Injektoren abgeworfen. Die Höhe der Auslassöffnungen wird durch an der Wand des Vorratsbehälters angeordnete Schieber verändert, wodurch die Schichthöhe des Schüttgutes auf der Walze ebenfalls verändert wird. In der obersten Öffnungsstellung der Schieber liegt der Schnittpunkt des Schüttwinkels des frei ausfliessenden Schüttgutes mit dem Umfang der Walze auf dem Scheitel der Walze. Mit dieser Vorrichtung können nur relativ kleine Korngrössen ausgetragen werden, da bei Verringerung der Schichthöhe auf der Walze gleichzeitig die Auslassöffnungen verkleinert werden, was bei kleinen Leistungen und insbesondere bei grösseren Korngrössen zu Blockagen des Schüttgutes im Vorratsbehälter führt. Auch an den vertikalen Zwischenteilen der vorderen Wand des Vorratsbehälters zwischen den Auslassöffnungen staut sich das Schüttgut, so dass das Fliessverhalten im Behälter beeinflusst wird und insbesondere bei feuchten, schlechter fliessenden Schüttgütern Blockagen auftreten können.

Der Erfindung liegt die Aufgabe zugrunde, diese Nachteile zu vermeiden und eine Vorrichtung zu schaffen, die eine genaue Dosierung der zugeteilten Menge für Schüttgüter auch mit einem grossen Korngrössenbereich und für Schüttgüter aller Art ermöglicht.

Die Lösung dieser Aufgabe erfolgt erfindungsgemäss durch die Merkmale des kennzeichnenden Teiles des Anspruchs 1.

Die Ausdrücke «Rückwand», «Vorderwand», «Rückseite», «Vorderseite» und «vor» sind immer gegen die Drehrichtung der Walze und den Fluss des Schüttgutstromes zu sehen. Der Neigungswinkel der Rückwand ist grösser als der Rutschwinkel des Schüttgutes. Im allgemeinen ist nur der untere Teil der Rückwand geneigt angeordnet. Die Vorderwand kann senkrecht oder geneigt angeordnet sein. Die Unterkante der Rückwand wird mit geringem Abstand zu der Walzenoberfläche angeordnet. Bei sehr feinkörnigem Schüttgut kann der schmale Spalt z.B. durch eine flexible Dichtleiste geschlossen werden. Die Unterkante der Rückwand wird auf der Rückseite der Walze, gegen die Drehrichtung gesehen, maximal bis zum Berührungspunkt der Tangente mit der Oberfläche der Walze angeordnet, wobei die Tangente unter dem Böschungswinkel des Schüttgutes zur Horizontalen an die Walze gelegt wird. Die Breite der Auslassöffnung in der Vorderwand des Vorratsbehälters wird so gewählt, dass der Strom des Schüttgutes beim Abwurf von der Walze die gewünschte Breite besitzt. Die Höhe der Auslassöffnung, d.h. die Höhe der Unterkante der Vorderwand in der Auslassöffnung, wird so gewählt, dass eine unter dem Böschungswinkel an diese Unterkante gelegte Gerade die Walze als Tangente auf der Vorderseite noch berührt oder dass diese Gerade unter der Oberkante des Schichthöhen-Schiebers in seiner tiefsten Stellung verläuft. Dadurch wird sichergestellt, dass beim Stillstand der Walze kein Schüttgut von der Walze herabfällt und bei der Rotation der Walze stets eine kontrollierte Menge abgeworfen wird. Der Schichthöhen-Schieber wird in einer stationär angeordneten Halterung geführt und gehalten. Seine Unterkante verläuft parallel zur Auslassöffnung in der Vorderwand und ist im austretenden Schüttgutstrom in horizontaler Richtung vor der Unterkante der Vorderwand und in vertikaler Richtung unter der Unterkante der Vorderwand angeordnet. Der Schichthöhen-Schieber kann senkrecht oder geneigt angeordnet sein. Die Schichthöhe des Schüttgutes auf der Walze wird durch Heben oder Senken des Schichthöhen-Schiebers eingestellt. Der Schnittpunkt einer unter dem Böschungswinkel des Schüttgutes von der Vorderseite der Walze an die Unterkante des Schichthöhen-Schiebers gelegten Geraden mit einer Geraden, die unter dem Böschungswinkel an die Unterkante der Rückwand des Vorratsbehälters gelegt wird, ergibt die Schichthöhe des Schüttgutes auf der Walze, die sich bei der Drehung der Walze einstellt. Dieser Schnittpunkt liegt bei der maximal möglichen Schichthöhe über dem Mittelpunkt der Walze und wandert mit abnehmender Schichthöhe zur Rückseite der Walze. Die Oberfläche der Walze kann glatt oder strukturiert ausgebildet sein.

Eine Ausgestaltung besteht darin, dass unter der Walze mehrere Abnahmestellen für einzelne Verbraucherstellen angeordnet sind, die Vorderwand des Vorratsbehälters mit einer durchgehenden Auslassöffnung für einen Schüttgutstrom über die Breite der Abnahmestellen auf der Walze ausgebildet ist, auf der Walze im Schüttgutstrom Verteilerkämme zur Unterteilung des Schüttgutstromes in einzelne Teilströme angeordnet sind, und zwischen benachbarten Verteilerkämmen jeweils ein verstellbarer Schichthöhen-Schieber in den einzelnen Teilströmen angeordnet ist. Die Auslassöffnung ist durchgehend ausgebildet, d.h. sie erstreckt sich ohne Zwischenstege über die gesamte Breite der Abnahmestellen, und auf dieser Breite tritt ein einheitlicher Schüttgutstrom auf die Walze aus. Die Verteilerkämme bestehen aus Blechen, die senkrecht zur Achse der Walze stationär angeordnet sind. Ihr Anfang liegt vor der Auslassöffnung, und ihre Höhe wird so bemessen, dass ihre Oberkante über der höchsten Schichthöhe des Schüttgutstromes auf der Walze liegt. Der Abstand der Kämme entspricht der gewünschten Breite der einzelnen Teilströme. Wenn sehr unterschiedliche Teilmengen zu den einzelnen Abnahmestellen gefördert werden müssen, kann der Regelbereich dadurch vergrössert werden, dass die Walzenabschnitte zwischen den Verteilerkämmen mit verschiedenem Durchmesser ausgebildet werden.

Eine vorzugsweise Ausgestaltung besteht darin, dass die Unterkante der Vorderwand des Vorratsbehälters senkrecht über der Unterkante der Rückwand des Vorratsbehälters angeordnet ist. Dadurch wird erreicht, dass die Höhe der Auslassöffnung einen maximalen Wert erreicht.

Eine vorzugsweise Ausgestaltung besteht darin, dass die Unterkante der Vorderwand des Vorratsbehälters maximal auf der Tangente angeordnet ist, die unter dem Böschungswinkel des Schüttgutes an die Abwurfseite der Walze gelegt wird. Wenn die Kante nicht oberhalb dieser Tangente angeordnet ist, wird ein unbeabsichtigter Austrag von Schüttgut bei herausgenommenem Schichthöhen-Schieber vermieden.

Die Vorteile der Erfindung bestehen darin, dass die Grösse der Auslassöffnung des Vorratsbehälters unabhängig von der gewünschten Schichthöhe auf der Walze ist und deshalb auch bei sehr kleinen Schichthöhen gross gehalten werden kann. Dadurch treten auch bei Schüttgütern mit einem grossen Korngrössenbereich und schlechtem Fliessverhalten keine Blockagen in der Auslassöffnung auf, und es ist eine sehr genaue Dosierung möglich. Das Fliessverhalten des Schüttgutes im Vorratsbehälter wird so günstig beeinflusst, dass auch feuchte, schlechter fliessende Materialien in genau dosierten Mengen ausgetragen werden können. Bei mehreren Teilströmen treten keine Beeinträchtigungen durch Stege in der Auslassöffnung auf.

Die Erfindung wird anhand von Figuren näher erläutert.

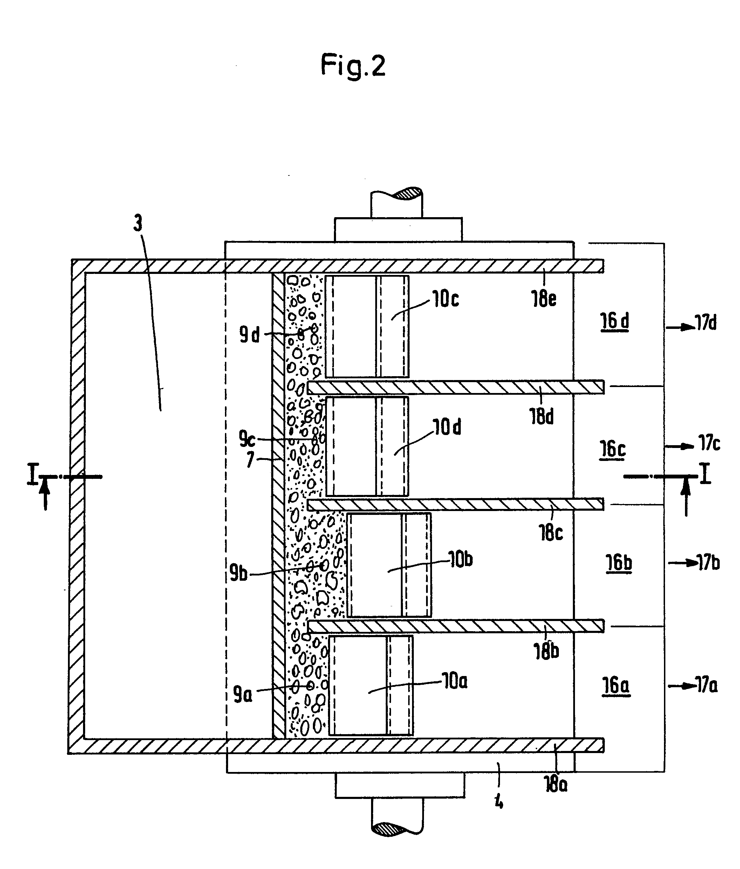

Figur 1 zeigt einen Querschnitt durch eine erfindungsgemässe Vorrichtung gemäss Linie I-I in Figur 2.

Figur 2 zeigt eine Aufsicht auf eine erfindungsgemässe Vorrichtung mit mehreren Teilströmen.

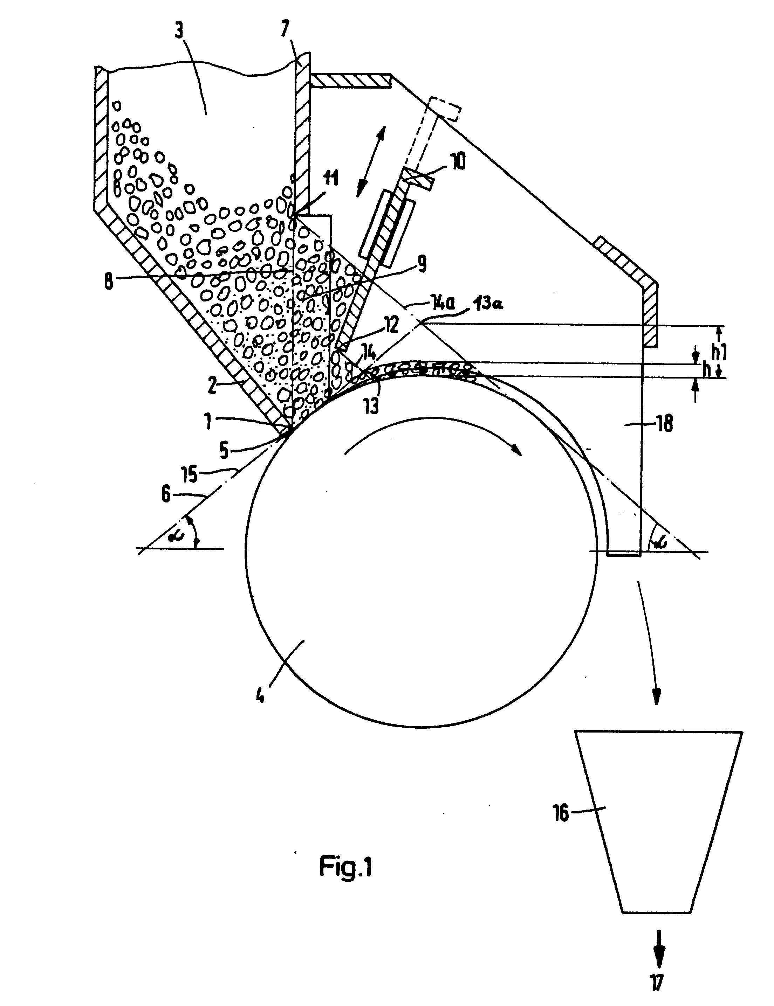

Die Unterkante 1 der geneigten Rückwand 2 des Vorratsbehälters 3 ist auf der Rückseite der Walze 4 auf dem Berührungspunkt 5 angeordnet, den die unter dem Böschungswinkel $\alpha$ an die Walze 4 gelegte Tangente 6 bildet. In der Vorderwand 7 des Vorratsbehälters 3 ist eine Auslassöffnung 8 angeordnet, aus welcher der Schüttgutstrom 9 auf die Walze 4 austritt. Im Schüttgutstrom 9 ist ein verstellbarer Schichthöhen-Schieber 10 so angeordnet, dass die Unterkante 12 in allen Stellungen einen horizontalen Abstand vor und einen vertikalen Abstand unter der Unterkante 11 der Vorderwand 7 des Vorratsbehälters 3 hat. Die Schichthöhe des Schüttgutes auf der Walze 4 wird durch die Stellung der Unterkante 12 im Schüttgutstrom 9 eingestellt. Die Schichthöhe h ergibt sich aus dem Schnittpunt 13 einer unter dem Böschungswinkel $\alpha$ des Schüttgutes von der Walze 4 an die Unterkante 12 des Schichthöhen-Schiebers 10 gelegten Geraden 14 mit einer unter dem Böschungswinkel $\alpha$ an die Unterkante 1 der Rückwand 2 gelegten Geraden 15. Die Gerade 15 entspricht in der Figur 1 der Tangente 6, da in der dargestellten Ausführung die Unterkante 1 auf dem Berührungspunkt 5 der Tangente 6 angeordnet ist. Wenn der Schichthöhen-Schieber 10 in die gestrichelte Stellung herausgezogen wird, ergibt sich die Schichthöhe $h_1$ durch den Schnittpunkt 13a der Geraden 14a und 15. In der dargestellten Ausführung ist die Unterkante 11 der Vorderwand 7 senkrecht über der Unterkante 1 der Rückwand 2 angeordnet. Gleichzeitig ist die Unterkante 11 auf der Geraden 14a angeordnet, welche die Tangente an die Abwurfseite der Walze 4 bildet, wodurch ein unkontrolliertes Auslaufen des Schüttgutes auch bei völlig herausgezogenem Schichthöhen-Schieber 10 vermieden wird. Unter der Walze 4 sind Abnahmestellen 16a-16d angeordnet, die mit Verbraucherstellen 17a-17d verbunden sind.

Im Schüttgutstrom 9 auf der Walze 4 sind Verteilerkämme 18a-18e angeordnet, die den Schüttgutstrom 9 in Teilströme 9a-9d unterteilen. Zwischen benachbarten Verteilerkämmen 18a und 18b, 18b und 18c, 18c und 18d, 18d und 18e sind jeweils Schichthöhen-Schieber 10a-10d angeordnet. Die Teilströme 9a-9d werden in die Abnahmestellen 16a-16d abgeworfen und den Verbraucherstellen 17a-17d zugeführt. Die Teilströme 9d und 9c haben die geringste Schichthöhe auf der Walze 4, Teilstrom 9b hat eine mittlere Schichthöhe, und Teilstrom 9b hat die grösste Schichthöhe.

## Patentansprüche

1. Vorrichtung zum dosierten Zuführen von Schüttgut mittels einer rotierenden Walze (4), die unter einem Vorratsbehälter (3) angeordnet ist, wobei die Unterkante (1) der geneigten Rückwand (2) des Vorratsbehälters (3) auf der Rückseite der Walze (4) angeordnet ist, in der Vorderwand (7) des Vorratsbehälters (3) eine Auslassöffnung (8) für einen Schüttgutstrom (9) auf die Walze (47 angeordnet ist, im Schüttgutstrom (9) ein verstellbarer Schichthöhen-Schieber (10) vor der Auslassöffnung (8) mit vertikalem Abstand unter der Unterkante (11) der Vorderwand (7) des Vorratsbehälters (3) angeordnet ist, und unter der Walze (4) eine Abnahmestelle (16) für die Verbraucherstelle (17) angeordnet ist, dadurch gekennzeichnet, dass die Unterkante (1) der geneigten Rückwand (2) des Vorratsbehälters (3) auf der Rückseite der Walze (4) auf dem Berührungspunkt (5) oder, in Drehrichtung gesehen, oberhalb des Berührungspunktes (5) einer Tangente (6) mit der Walze (4) angeordnet ist, die unter dem Böschungswinkel $\alpha$ des Schüttgutes an die Walze (4) gelegt wird, und dass der Schichthöhen-Schieber (10) mit horizontalem Abstand vor der Unterkante (11) der Vorderwand (7) des Vorratsbehälters (3) angeordnet ist und die Stellung der Unterkante (12) des Schichthöhen-Schiebers (10) so eingestellt wird, dass der Schnittpunkt (13) einer unter dem Böschungswinkel von der Walze (4) an die Unterkante (12) des Schichthöhen-Schiebers (10) gelegten Geraden (14) mit einer unter dem Böschungswinkel $\alpha$ an die Unterkante (1) der Rückwand (2) gelegten Geraden (15) die gewünschte Schichthöhe (h) des Schüttgutes auf der Walze (4) ergibt.

2. Vorrichtung nach Anspruch 1, dadurch gekennzeichnet dass unter der Walze (4) mehrere Abnahmestellen (16a-16d) für einzelne Verbraucherstellen (17a-17d) angeordnet sind, die Vorderwand (7) des Vorratsbehälters (3) mit einer durchgehenden Auslassöffnung (8) für einen Schüttgutstrom über die Breite der Abnahmestellen (16a-16d) auf der Walze (4) ausgebildet ist, auf der Walze (4) im Schüttgutstrom (9) Verteilerkämme (18a-18e) zur Unterteilung des Schüttgutstromes (9) in einzelne Teilströme (9a-9d) angeordnet sind, und zwischen benachbarten Verteilerkämmer (18a-18e) jeweils ein verstellbarer Schichthöhen-Schieber (10a-10d) in den einzelnen Teilströmen (9a-9d) angeordnet ist.

3. Vorrichtung nach Anspruch 1 oder Anspruch 2, dadurch gekennzeichnet, dass die Unterkante (11) der Vorderwand (7) des Vorratsbehälters (3) senkrecht über der Unterkante (1) der Rückwand (2) des Vorratsbehälters (3) angeordnet ist.

4. Vorrichtung nach einem der Ansprüche 1 bis 3, dadurch gekennzeichnet, dass die Unterkante (11) der Vorderwand (7) des Vorratsbehälters (3) maximal auf der Tangente (14a) angeordnet ist, die unter dem Böschungswinkel α des Schüttgutes an die Abwurfseite der Walze (4) gelegt wird.

**Claims**

1. Apparatus for supplying bulk material at a controlled rate by means of a rotating cylinder (4) arranged below a supply bin (3), in which the lower edge (1) of the inclined rear wall (2) of the supply bin (3) is arranged on the rear side of the cylinder (4), an outlet opening (8) for a stream (9) of bulk material onto the cylinder (4) is arranged in the front wall (7) of the supply bin (3), an adjustable layer height slider (10) is arranged in the stream of bulk material in front of the outlet opening ()8) with a vertical spacing beneath the lower edge (11) of the front wall (7) of the supply bin (3), and below the cylinder (4) a removal point (16) is arranged for the consumer point (17), characterized in that the lower edge (1) of the inclined rear wall (2) of the supply bin (3) is arranged on the rear side of the cylinder (4) on the contact point (5) or, viewed in the direction of rotation, above the contact point (5) of a tangent (6) with the cylinder (4), which is disposed at the angle of repose α of the bulk material to the cylinder (4), and that the layer height slider (10) is arranged with a horizontal spacing in front of the lower edge (11) of the front wall (7) of the supply bin (3) and the position of the lower edge (12) of the layer height slider (10) is adjusted such that the point of intersection (13) of a straight line (14) disposed at the angle of repose from the cylinder (4) to the lower edge (12) of the layer height slider (10) with a straight line (15) disposed at the angle of repose α to the lower edge (1) of the rear wall (2) produces the desired layer height (h) of the bulk material on the cylinder (4).

2. Apparatus according to Claim 1, characterized in that a plurality of removal points (16a to 16d) for individual consumer points (17a to 17d) are arranged below the cylinder (4), the front wall (7) of the supply bin (3) is formed with a continuous outlet opening (8) for a stream of bulk material over the width of the removal points (16a to 16d) on the cylinder (4), on the cylinder (4) in the stream (9) of bulk material dividers (18a to 18e) are arranged to divide the stream (9) of bulk material into individual branch streams (9a to 9d) and in each case an adjustable layer height slider (10a to 10d) is arranged in the individual branch streams (9a to 9d) between adjacent dividers (18a to 18e).

3. Apparatus according to Claim 1 or Claim 2, characterized in that the lower edge (11) of the front wall (7) of the supply bin (3) is arranged vertically above the lower edge (1) of the rear wall (2) of the supply bin (3).

4. Apparatus according to one of Claims 1 to 3, characterized in that the lower edge (11) of the front wall (7) of the supply bin (3) is arranged maximally on the tangent (14a), which is disposed at the angle of repose α of the bulk material to the discharge side of the cylinder (4).

**Revendications**

1. Dispositif d'alimentation dosée en produit en vrac au moyen d'un cylindre (4) rotatif disposé en-dessous d'un réservoir (3), le bord inférieur (1) de la paroi postérieure (2) inclinée du réservoir (3) étant disposé du côté postérieur du cylindre (4), un orifice de sortie (8) d'un courant de produit en vrac (9) sur le cylindre (4) étant ménagé dans la paroi antérieure (7) du réservoir (3), un tiroir (10) réglable de réglage de la hauteur de la couche étant disposé en avant de l'orifice de sortie (8) à distance, suivant la verticale, en-dessous du bord inférieur (11) de la paroi antérieure (7) du réservoir (3) et un poste de réception (16) étant disposé en-dessous du cylindre (1) pour le poste d'utilisation (17), caractérisé en ce que le bord inférieur (1) de la paroi postérieure (2) inclinée du réservoir (3) est disposé du côté postérieur du cylindre (4) au point de contact (5) ou, considéré dans le sens de rotation, au-dessus du point de contact (5) d'une tangente (6) au cylindre (4) faisant avec celui-ci (4) l'angle de talus (α) du produit en vrac, et en ce que le tiroir (10) de réglage de la hauteur de la couche est disposé à distance, suivant la direction horizontale, du bord inférieur (9) de la paroi antérieure (7) du réservoir (3) et la position du bord inférieur (12) du tiroir (10) de réglage de la hauteur de la couche est réglée de manière que le point d'intersection (13) d'une droite (14), faisant l'angle de talus, issue du cylindre (4) et passant par le bord inférieur (12) du tiroir (10) de réglage de la hauteur de la couche, et d'une droite (15) faisant l'angle de talus (α) et passant par le bord inférieur (1) de la paroi postérieure (2), donne la hauter de couche (h) souhaitée du produit en vrac sur le cylindre (4).

2. Dispositif suivant la revendication 1, caractérisé en ce que sous le cylindre (4) sont disposés plusieurs postes de réception (16a à 16d) pour des postes d'utilisation (17a à 17d) individuels, la paroi antérieure (7) du réservoir (3) etant muni d'un orifice (8) continu de sortie d'un courant de produit en vrac s'étendant sur la largeur des postes de réception (16a à 16d) sur le cylindre (4), des peignes répartiteurs (18a à 18e) étant disposés sur le cylindre (4) dans le courant du produit en vrac (9), pour subdiviser le courant de produit en vrac (9) en courants partiels (9a à 9d), et des tiroirs (10a à 10d) réglables, de réglage de la hauteur de la couche, étant disposés dans les courants partiels (9a à 9d) individuels, entre des peignes répartiteurs (18a à 18e) voisins.

3. Dispositif suivant la revendication 1 ou suivant la revendication 2, caractérisé en ce que le bord inférieur (11) de la paroi antérieure (7) du réservoir (3) est disposé à la verticale, au-dessus du bord inférieur (1) de la paroi postérieure (2) du réservoir (3).

4. Dispositif suivant l'une des revendications 1 à 3, caractérisé en ce que le bord inférieur (11) de la paroi antérieure (7) du réservoir (3) est disposé au maximum sur la tangente (14a) qui fait l'angle de talus (α) du produit en vrac, du côté du déchargement du cylindre (4).

Fig.1

# Fig.2